(19) Europäisches Patentamt
European Patent Office
Office européen des brevets

(11) **EP 2 261 398 B1**

(12) **EUROPEAN PATENT SPECIFICATION**

(45) Date of publication and mention
of the grant of the patent:
**05.12.2018 Bulletin 2018/49**

(51) Int Cl.:
***C25D 5/02*** *(2006.01)*      ***C25D 5/18*** *(2006.01)*
***C25D 15/02*** *(2006.01)*

(21) Application number: **09007696.9**

(22) Date of filing: **10.06.2009**

(54) **Metal foams**

Metallschäume

Mousses métalliques

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**15.12.2010 Bulletin 2010/50**

(73) Proprietor: **Universität des Saarlandes**
**66123 Saarbrücken (DE)**

(72) Inventors:
• **Jung, Anne**
**66640 Namborn (DE)**
• **Natter, Harald, Dr.**
**66117 Saarbrücken (DE)**
• **Hempelmann, Rolf, Prof.**
**66386 St. Ingbert (DE)**
• **Lach, Ehrhardt**
**26842 Ostrhauderfehn (DE)**

(74) Representative: **Samson & Partner Patentanwälte mbB**
**Widenmayerstraße 6**
**80538 München (DE)**

(56) References cited:
**US-A1- 2006 068 026      US-B1- 6 217 732**

• YANG W ET AL: "Nanostructured palladium-silver coated nickel foam cathode for magnesium-hydrogen peroxide fuel cells" ELECTROCHIMICA ACTA, ELSEVIER SCIENCE PUBLISHERS, BARKING, GB, vol. 52, no. 1, 5 October 2006 (2006-10-05), pages 9-14, XP025168108 ISSN: 0013-4686 [retrieved on 2006-10-05]
• BOONYONGMANEERAT Y ET AL: "Mechanical properties of reticulated aluminum foams with electrodeposited Ni-W coatings", SCRIPTA MATERIALIA, ELSEVIER, AMSTERDAM, NL, vol. 59, no. 3, 1 August 2008 (2008-08-01) , pages 336-339, XP022704440, ISSN: 1359-6462, DOI: 10.1016/J.SCRIPTAMAT.2008.03.035 [retrieved on 2008-04-06]
• JUNG A ET AL: "Nanocrystalline alumina dispersed in nanocrystalline nickel: enhanced mechanical properties", JOURNAL OF MATERIALS SCIENCE, KLUWER ACADEMIC PUBLISHERS, BO, vol. 44, no. 11, 3 April 2009 (2009-04-03) , pages 2725-2735, XP019679694, ISSN: 1573-4803

## Description

### FIELD OF THE INVENTION

The present invention relates to open cell porous structures comprising a nanocrystalline metallic or a nanocrystalline metal matrix composite coating and to a process for producing the structures.

### BACKGROUND OF THE INVENTION

Metal foams are known materials and are e.g. described in EP 0 151 064 A1. They are open cell porous structures with an outer surface that conventionally consists of a more or less dense metallic coating deposited by electroplating. The coated metal foams disclosed in EP 0 558 142 A1 have particularly large surfaces with metal crystallites having a high aspect ration and are obtained by adding a chemical compound having the properties of a second class brightener to an electrolytic nickel bath.

US 6,217,732 B1 discloses a coated product comprised of a three dimensional network which is coated with particles that have an average particle size greater than 0.5 microns in conjunction with particles having an average size less than 150 nm. The coated product may serve as a catalyst support, or the coated particles themselves are catalyst particles.

US 2006/0068926 A1 describes a colloidally stable suspension of naked metal nanocrystals (preferably Ag) being less than 100 nm in particle size. A band-aid type dressings may be soaked with such an Ag suspension. An Ag suspension can also be used for electronic devices.

W.Yang et al. "Nanostructured palladium-silver coated nickel foam cathode for magnesium-hydrogen peroxide fuel cells", Electrochimica Acta 52 (2006) 9-14, disclose a nickel foam cathode caoted with a nanoisland silver caoting on which 0.02 mg cm$^{-2}$ Pd is elcetrodeposited. The overall content of the deposit is 65.98 wt% Pd and 34.02 wt% Ag. Given the diameters of the Ag atom and Pd atom, this yields a coating layer which has an average thickness far below 1 $\mu$m.

Y. Boonyongmaneerat et al., Scripta Materialia 59 (2008) 336-339 "Mechanical properties of reticulated aluminum foams with electrodeposited Ni-W coatings" discloses a Ni-W coated aluminum foam, wherein the coating shows a thickness gradient in which the near surfaces volumes of the samples exhibit thicker coating than their cores.

Metals foams have many desirable properties. They posses a large surface, are light-weighted and still have good mechanical properties. This makes them suitable for many applications, among others in electrochemical applications, as construction materials and as a support for catalytic materials.

It has now been found that in particular the mechanical properties of conventional metal foams can be greatly improved by modifying the metallic coating thereof such that the coating comprises nanocrystals.

### SUMMARY OF THE INVENTION

Thus, the present invention relates to an open cell porous structure according to claims 1-12.

The invention further relates to a process for the production of these open cell porous structures, according to claims 13-17.

### SHORT DESCRIPTION OF THE DRAWINGS

Fig. 1 is a schematic exploded view of a cathode (raw or intermediate metal foam) and an anode according to the invention.

Fig. 2 shows a schematic front sectional view of a cathode (raw or intermediate metal foam) and an anode according to the invention submersed in an outer electrolyte bath for coating the cathode with a metal matrix composite.

Fig. 3 shows the energy absorption capability of various foams according to the invention compared to non-coated foams.

### DESCRIPTION OF THE EMBODIMENTS

The open cell porous structure of the invention comprises a nanocrystalline metallic or nanocrystalline metal matrix composite coating wherein the nanocrystals have a crystallite size of from 5 nm to 150 nm. Such a structure will sometimes hereinafter be referred to as metal foam or metal foam of the invention.

The cells may optionally be filled with an elastomeric or thermosetting plastics.

The crystallite size of the nanocrystals is from 10 nm to 100 nm. The specific crystallite size depends on the intended application. If a foam having a high strength is desired, the crystallite size will be in the lower range, if the foam is intended to be more deformable and absorb energy, the crystallites will be larger so that the coating is ductile enough for the foam structure to deform and not to break because of brittleness. In the latter case, e.g. a crystallite size of 40 to 50 nm for a nickel coating is preferred.

The metal, metal alloy or nanocrystalline metal matrix composite forming the nanocrystalline coating of the open cell porous structures of the invention may be selected from any metal, metal alloy and metal matrix composite stable in aqueous surroundings, depending on the intended use of the inventive structures. As examples of metals useful in the present invention nickel, zinc, tin, chromium, iron, copper, titanium, silver, gold, platinum and the other elements of the platinum group, such as Ru, Os, Rh, Ir and Pd, are given. Metal alloys may e.g. be selected from brass, bronze, monel metal, iron-chromium alloys, and combinations thereof. For certain applications, nickel and nickel alloys are particularly preferred.

The metal matrix composite comprises a matrix of a metal or metal alloy, as mentioned above, wherein co-deposited metal oxide, carbide, sulfide or nitride nanoparticles, nano-diamond particles, PTFE (polytetrafluoroethylene) nanoparticles or CNT (carbon nanotubes) (hereinafter collectively called "non-metal component") are included. The metallic component in the co-deposited metal oxide, carbide, sulphide or nitride nanoparticles may be any suitable metal, e.g. the ones mentioned above. Particularly preferred metals are: Al, Ti, Zr, Hf, W, Y, Nb, V, Ta and Mo. The size of the co-deposited, included particles is in the range of 10-200 nm, preferably 10 to 150 nm, more preferably 10 to 100 nm.

The thickness of the naoncrystalline metallic coating is substantially uniform, which means that the deviation from the mean thickness is not greater than about 20%, and may vary to a great degree. The thicknesses are within a range of from 1 to 1000 $\mu$m. More usual thicknesses are from 20 to 500 $\mu$m. For certain applications thicknesses of from 50 to 250 $\mu$m are preferred.

On the other hand, there may be a substantially linear or also exponential gradient in the thickness of the coating, i.e. decrease from the outside of the metal foam to the interior of the metal foam or from one side of the metal foam to the other. The gradient may e.g. be such that the outer (or upper) region of the porous structure is covered with a (if desired, thick) coating while the interior (or lower region) of the structure is substantially uncoated. The uncoated or raw open cell porous structure (the substrate) can be made of a great variety of materials e.g. selected from one or more of a metal or metal alloys; a metal (e.g. aluminium) or metal alloy (e.g. AlSi7Mg0.3) foam; The material of the substrate foam could also consist of a metal oxide, carbide and/or nitride, carbon, an organic polymeric material, silicone and a material derived from natural polymers and fibers and combinations thereof. In the case of non-conductive materials the foam substrates have to be coated with a conductive material.

"Uncoated" in this context means "not coated by the inventive nanocrystalline metallic coating".

The raw open cell porous structure may be a felt, a woven fabric, a knitted fabric and the like, made from fibers of the above materials.

Often the raw open cell porous structure is a reticulated foam made from an organic polymeric material, a silicone, a ceramic or a metal. Metal foams are available from a number of suppliers, e,g, ERG Materials and Aerospace Corporation, Oakland, California, USA, Norsk Hydro a.s., Sunndalsøra, Norway, Georgia Institute of Technology, Materials Science and Engineering, Atlanta, Georgia, USA, INCO Limited, Mississauga, Ontario, Canada, and M-Pore GmbH, Dresden, Germany.

For certain applications, an aluminium foam (e.g. "Duocel" from ERG, Oakland, California, USA) or a AlSi7Mg0.3 foam (e.g. available from M-Pore GmbH, Dresden, Germany) is particularly preferred.

If the raw open cell porous structure is electrically non-conductive, it is coated with a thin conductive layer underneath the nanorystalline metallic coating.

This layer may e.g. be selected from metals and metal alloys, conducting ceramic and oxide materials, carbon and conducting polymers. If a metal is used, it may be the same metal as used for the nanocrystalline coating, or a different metal.

The size of the pores of the open cell porous structure of the invention may vary within a broad range from micrometers to centimeters and depends on the intended use of the material. A common measure for the pore size is ppi (pores per inch).

The porosity of the open cell porous structure of the invention usually is high, e.g. greater than 80%, even greater than 90%, and in certain cases as high as 95 to 98 %.

The dimensions of the metal foam may vary from extremely thin in the millimeter or, for special applications, even in the micrometer range (such as about 100 $\mu$m) to very thick structures in the range of several centimeters e.g. in the case of construction materials. Such large electroplated porous structures are available by the specific process of the invention described below and are nowhere described in the prior art. Thus, structures having a thickness of more than about 1 cm, about 2 cm, about 3 cm and particularly about 4 cm or even about 5 cm may easily be prepared by the inventive process.

The mechanical properties of the metal foams of the invention, such as compression strength, energy absorption capability, flexibility and tensile strength, vary with the material of the raw open cell structure, the thickness, the pore size, the coating thickness and the size of the nanocrystallites of the open cell porous structure of the invention. In any case they are superior to the corresponding mechanical properties of similar open cell porous structures that have a conventional non-nanocrystalline metal coating. Without wishing to be bound by theory, it is believed that one of the reasons for the improved mechanical properties is the fact that the nanocrystallites inhibit the propagation of fissures and cracks.

The metal foams of the invention may have a further outer coating. Such coating may e.g. be selected from a protective coating such as a silicone coating, or a coating comprising an inorganic, organic or biochemical catalyst, such as an enzyme.

The uses of the open cell porous structure of the invention are numerous. They can e.g. serve as electrodes, as sieves, as supports for catalysts, as light-weighted construction materials e.g. for military or space applications, as antimicrobial materials (e.g. when plated with silver or copper) for the manufacture of a great variety of articles, and as shock-absorbing materials of all kinds, for example as bullet-proof vests. In the latter application, they are superior to Kevlar®, since Kevlar® is hygroscopic.

Metal foams filled with an elastomeric or thermosetting plastics show improved damping properties. This is important in vehicles or engines with a high vibration. Furthermore, the metal foam acts as a rigid grid structure which keeps the filling in its form under a load.

In the following, the process for preparing the open cell porous structures coated with a nanocrystalline metallic or metal matrix composite coating is described.

Generally speaking, a raw open cell porous structure, as describe above, and, if necessary, made conductive by an electrically conducting coating, is electroplated by using a pulsed, pulse reversed or a direct current and a specially designed anode.

The raw open cell porous structures, including their porosity, pore size and overall size, may be selected from the ones mentioned above. The manufacture of such structures, e.g. of metal foams, is broadly described in the prior art, and many of them are available commercially, as mentioned above.

A non-conducting raw open cell porous structure made e.g from an organic polymeric foam material can be made conductive by applying e.g. the above-mentioned materials through a great variety of methods known to the person skilled in the art. Therefore only a few selected methods are mentioned here. Organic foams can be metallized e.g. by cathode sputtering, chemical metallization or by deposition of gaseous metal carbonyl compounds. Another method to make organic foams conductive is by applying conductive carbon black e.g. from a colloidal suspension of carbon black in a volatile organic solvent. Coating of conductive ITO (indium tin oxide) films can be accomplished by means of a sol-gel process. The electrically conducting open cell porous structure so obtained is herein called "intermediate open cell porous structure".

The raw or intermediate open cell porous structure is then electroplated with a metal, a metal alloy or a nanocrystalline metal matrix composite. In order to obtain a nanocrystalline metallic coating by electrochemical deposition of the metal or alloy or a nanocrystalline metal matrix composite by additional deposition of the above-mentioned materials, specific conditions at least with respect to the anode have to be met.

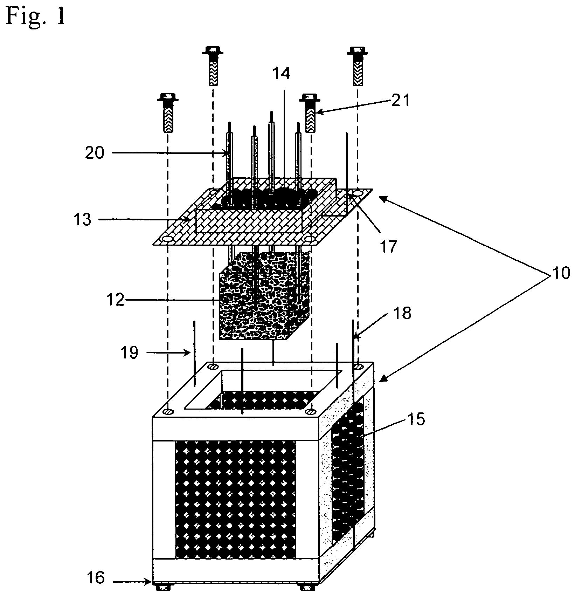

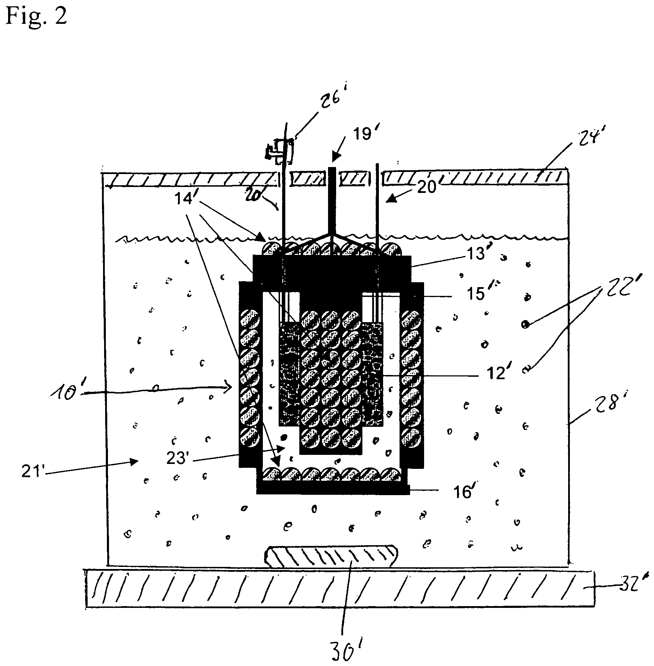

In the electroplating process according to the invention, the conductive raw or intermediate porous structure (substrate) serves as the cathode. This cathode is surrounded from all sides by a sacrificial anode assembly. The anode or anodes are positioned opposite to each face of the raw or intermediate porous structure. In one embodiment the anode assembly forms a cubic or cuboidal cage around the cathode or substrate (see Fig. 1). This is preferred for the deposition of metals and metal alloys. In another embodiment the anode is made of six contiguous flat parts with interspaces between the side parts in order to circulate electrolyte through the anode assembly (see Fig. 2). This arrangement is preferred for the deposition of nanocrystalline metal matrix composites.

The anode, as depicted in Fig. 1 and Fig. 2, comprises a fluid-permeable, e.g. porous plate-shaped or grid-like metal structure inert under the electrolytic conditions, such as made of titanium expanded metal, the top and bottom part of which carries metal pieces, e,g, balls, of the metal to be plated (the actual sacrificial anode). The four side parts thereof have a double-walled structure, which is filled with further pieces of the metal to be plated (the remainder of the actual sacrificial anode). The metal anodally dissolves during the electrolysis.

These arrangements have the following effects. Because of the homogenous field due to the special arrangement of the anode, there is a homogenous electric double layer in the whole porous structure (substrate). This homogeneity prevents any inhomogenous crystal growth which is very important for the formation of nanocrystallites. Furthermore, the homogenous field allows a substantially homogenous growth of nanocrystals from the metal ions in the electrolytic bath throughout the porous structure without the necessity to circulate the bath through the structure when metals or metal alloys are deposited. In the case of a nanocrystalline metal matrix deposition where the circulation of the electrolyte is necessary, there is still a homogenous field. By this, much larger porous structures than hitherto possible can be uniformly coated also in the interior thereof.

The distance of the anodes from the outer surface of the porous structure to be coated is such that the electrical field between the cathodes and the anode remains homogenous. In special cases this distance may be about 2 cm.

The electrolytic bath generally contains the same ingredients as used in conventional electroplating of metals, metal alloys or metal matrix composites. Exemplary electrolyte compositions are given in the Examples. The use of a surfactant or wetting agent, such as sodium dodecyl sulfate, is e.g. advantageous, when sulfate or halide salts of the metals to be coated are used.

A grain refiner may be added to the electrolyte. Grain refiners in this context are low molecular weight organic compounds that are easily adsorbed by and desorbed from the surface of the uncoated or intermediate porous structure. Examples thereof are the so-called first class brighteners that comprise a $SO_2$ containing group, such as saccharine, naphthalene sulfonic acids, alkyl sulfonic acids, benzene sulfonic acids, aryl sulfone sulfonates, sulphonamides, sulfonimides, low molecular weight compounds that comprise a phosphorus- or nitrogen-containing group), such as EDTA, butanediamine, ammonia, nicotinic acid and cyanides, as well as polycarboxylic acids, such as citric acid and tartaric acid. These grain refiners prevent the surface diffusion of atoms of island-like deposition of metal atoms and thus the formation of aggregations of the nanocrystallites. It must be emphasized that the so-called second class brighteners (for a definition see EP 0 558 142 B1) may not be used in the process of the invention, since they provide a smooth surface consisting of crystallites which are larger than nanocrystallites.

The electric current applied to the electrolytic bath is a pulsed, pulse reverse or direct current. The pulsed, pulse reverse or direct current in combination with the above-mentioned anode arrangement allows the formation of nanocrystals.

Since not as common as the plating of metals or metal alloys with the aid direct current or pulsed current well-known to the person skilled in the art, the principles of pulse reverse plating and metal matrix composite plating will be briefly described in the following.

The in-situ formation of nano-structured or nano-sized oxides in a metal matrix can be achieved by pulsed reverse plating using metals which can be oxidized by electrochemically prepared oxygen (e.g. Cu, Ni, Co, Fe, Cr,). The procedure of the pulse reverse plating process works in two steps:

> First step (cathodic pulse): During the negative polarisation of the working electrode nanostructured metal is deposited (e.g. $Ni^{2+} + 2\ e^- \rightarrow Ni$).
> Second step (anodic pulse): During the positive polarisation of the working electrode highly reactive oxygen ($O_2$) is generated from the aqueous electrolyte which oxidizes a part of the metal clusters prepared in step 1 ($O^{2-} \rightarrow 0.5\ O_2 + 2\ e^-$).

In order to achieve only a partial oxidation of the deposited metal (from step 1) the charge (charge = $t_{on} * I_{pulse}$; wherein $t_{on}$ is the duration of the current of the pulse and $I_{pulse}$ is the current of the pulse) of the anodic pulse must be less than the charge of the cathodic pulse.

Preferably the charge of the anodic pulse is between 30-90% of the charge of the cathodic pulse for a partial oxidation. The ratio metal : metal oxide can be controlled by the current density and the duration of the anodic pulse.

The anodic pulse follows the positive pulse with or without a time delay (0-80% of the $t_{off}$ time; $t_{off}$ is the duration with zero current).

A great advantage of this technique is a very homogeneous distribution of oxides in the metal matrix.

In the nanocrystalline metal matrix composite coatings of the present invention, the content of the non-metal component depends on the nature thereof and may comprise e.g. 3-30% by volume, more often 5-20° by volume, although higher proportions may be achieved. The electrolyte in metal matrix composite plating is a dispersion electrolyte including one or more salts of the metal or metals to be deposited and a dispersion of nano-sized particles (e.g. from 20 to 100 nm) of one or more of the above-mentioned non-metal components. The particles must form a stable dispersion in the aqueous salt solution, .e.g. chemically by use of surface active agents or physically by agitating or blowing in of gases. The particle content of the electrolyte depends on the nature of the particles and may be e.g. 10-200 g/l, more often 20 to 120 g/l.

The current used in the plating of nanocrystalline metal matrix composite is a direct current, a pulsed current or a pulse reverse current. The particles usually carry a positive charge by having absorbed metal ions or a surface active agent on their surface and, thus, migrate in the electrical field to the cathode. They also migrate by convection and diffusion, which is important for their migration in the $t_{off}$ time of a pulsed current and a reverse pulse current as well as in the time where the substrate is the anode in a reverse pulse plating.

The particle contents which may be achieved by a pulsed or reverse pulsed current are higher than in the case of a direct current. For very high contents of the non-metal component in the composite, low duty cycles in a reverse current process are preferable. The particles which may be deposited in a pulsed or reverse pulsed current are generally smaller than the particles in a direct current process.

The. selection of the current parameters, i.e. current density, frequency and the pulse duration determine the size of the metal nanocrystallites and the properties of the coating, such as thickness, hardness, ductility and homogeneity. For direct current plating, exemplary parameters are an average current density $j_m$ of from 0.2 to 40 $mA/cm^2$, preferably from 0.4 to 20 $mA/cm^2$. Exemplary parameters of a pulsed and pulse reverse current useful in the present invention are: an average current density $j_m$ of from 0.2 to 40 $mA/cm^2$, preferably from 0.4 to 20 $mA/cm^2$, a frequency of from 10 Hz to 1 kHz, preferably from 50 Hz to 200 Hz, and a duty cycle, i.e. pulse length ($t_{on}$) in percent of the period length ($t_{on} + t_{off}$; $t_{off}$ being the length of zero current) of from 5-70%, e.g. from 5-50%, preferably of from 15-40%, such as from 20-35% .

For pulse reverse plating the charge of the anodic pulse is in the range of from 0 to 50% of the charge of the cathodic pulse.

The average current of a pulse plating process is defined as:

$$I_m = I_P \cdot \frac{t_{on}}{t_{on} + t_{off}}$$

wherein Ip is the current of the pulse.

The average current of a pulse reverse plating process is defined as:

$$I_m = \frac{I_{cathode} \cdot t_{cathode} - I_{anode} \cdot t_{anode}}{t_{cathode} + t_{anode}}$$

wherein $I_{cathode}$, $I_{anode}$ are the current of the cathodic/anodic pulse and $t_{cathode}$/$t_{anode}$ are the length of the cathodic/anodic pulse.

If the thickness is homogenous, it is only controlled by the current density and the duration of the electroplating. By continuously reducing the electrolyte concentration during the electroplating, metal foams with a gradient in the thickness from the outside to the inside may be produced. A gradient from the top of the metal foam to the lower part thereof may be produced by either pumping off the electrolyte continuously or by continuously pulling the metal foam out of the electrolyte.

Usually, the bath temperature is from room temperature to about 60 °C. The temperature controls the crystallite size and the surface morphology. A higher temperature promotes a faster crystal growth and such a larger crystallite size.

The nano-coated open cell porous structure so obtained may be filled with an elastomeric or thermosetting plastics. This may be accomplished by pouring the molten or not yet hardened plastics into the metal foam or by dipping the metal foam into the molten or not yet hardened plastics, and cooling.

The nano-coated open cell porous structure of the invention may be further coated with an outer coating, e.g. a protective coating such as a silicone coating. It may also serve as a carrier for inorganic, organic or biochemical catalysts, such as enzymes. The processes for applying such further coatings or catalysts are not different from the ones used with conventional electroplated open cell porous structures and are known to the person skilled in the art.

There is, however, one compulsory restriction to any process conducted with the nano-coated open cell porous structures of the invention: the structure must not be heated to a temperature above about 60 °C for a significant time, since otherwise the nanocrystallites will aggregate to larger units and the nano-coated porous structure will lose its favourable properties.

Fig. 1 is a schematic exploded view of a cubic cage-like anode assembly 10 and a cathode (raw or intermediate metal foam) 12 inserted therein. The fluid-permeable cage-like anode comprises a top part 13 made of expanded Ti metal and carrying balls of a sacrificial metal 14 (part of the actual sacrificial anode), a bottom part 16 made of expanded Ti metal and inside covered with the sacrificial metal (another part the actual sacrificial anode) and four double-walled side parts 15 made of expanded Ti metal and filled with the sacrificial metal (the remainder of the actual sacrificial anode). There are separate electrical contacts (17, 18 and 19, respectively) to each of the top 13, the bottom 16 and the four double-walled side parts 15 of the cage-like anode assembly 10. The cathode 12 has isolated electrical contacts 20 which extend through balls of a sacrificial metal 14 in the top 13 of the anode assembly 10. The anode assembly 10 is screwed together by screws 21 with isolation against the Ti expanded metal.

Fig. 2 shows a schematic front sectional view of a six-sided anode assembly 10' according to the invention and a cathode 12' (raw or intermediate metal foam) in the center thereof.

The anode assembly 10' is submersed in an outer electrolyte bath 21' contained in a glass vessel 28' for coating the cathode 12' with a metal matrix composite. Non-metal component particles 22' are dispersed in the electrolyte bath 21'. A magnetic stirring bar 30' can be agitated by a magnetic stirrer 32'. The fluid-permeable six-sided anode 10' with interspaces 23' between four double-walled side parts 15' comprises a top part 13' made of expanded Ti metal and carrying balls of a sacrificial metal 14' (part of the actual sacrificial anode), a bottom part 16' made of expanded Ti metal and also carrying sacrificial metal 14' (another part the actual sacrificial anode) and the four double-walled side parts 15' made of expanded Ti metal and filled with balls of sacrificial metal 14' (the remainder of the actual sacrificial anode). There is an electrical contact 19' to the top 13' of the six-sided anode assembly 10'. The cathode 12' has isolated electrical contacts 20' which extend through balls of a sacrificial metal 14' in the top 13' of the anode assembly 10'. The anode assembly 10' and the cathode 12' are suspended by luster terminals 26' in the electrolyte bath 21'.

The following non-limiting examples illustrate the invention further.

**EXAMPLES**

The following abbreviations are used in the Examples:

T = temperature
ppi = pores per inch
$t_{on}$ = duration of the current pulse
$t_{off}$ = duration of zero current
$j_p$ = current density of current pulse
$j_m$ = average current density ($j_m = j_p * t_{on} / (t_{on} + t_{off})$)
t = duration of deposition

A raw metal foam cube having a side length of 4 cm was used in each example. A cage anode (see Fig. 1) was used in the production of metal foams having nanocrystalline a metallic coating of Examples 1 to 4, and an anode as shown in Fig. 2 ("six-sided anode") was used for the production of metal foams having a metal matrix composite coating in Example 5. The distance between the faces of the cage anode or the six-sided anode and the faces of the cube was 2 cm in each example. The actual sacrificial anode consisted of the metal to be deposited.

**Example 1**

Electrolyte:

Nickelsulfamate concentrate (Enthone; 110 g/l Ni)

5 g/l nickel chloride hexahydrate
35 g/l boric acid
pH = 3.8
T = 50°C

Raw metal foam:

10 ppi aluminium foam (AlSi7Mg0.3, M-PORE, Dresden, Germany)

Parameters of deposition:

$t_{on}$: 2.5 ms / $t_{off}$: 7.5 ms
$j_p$: 1.8 mA/cm$^2$
Frequency: 100 Hz
t: 3d 18h 25min
The product was an aluminium foam coated with a 50 $\mu$m thick layer of nano-Ni (average crystallite size: 28 nm)

## Example 2

Electrolyte

Nickelsulfamate concentrate (Enthone; 110 g/l Ni)
5 g/l nickel chloride hexahydrate
35 g/l boric acid
pH = 3.8
T = 50°C

Raw metal foam:

10 ppi aluminium foam (AlSi7Mg0.3, M-PORE, Dresden, Germany)

Parameters of deposition:

$j_m$: 1.1 mA/cm$^2$
t: 3d 1h 58min
The product was an aluminium foam coated with a 100 $\mu$m thick layer of nano-Ni (average crystallite size: 47 nm)

## Example 3

Electrolyte:

200 g/l copper sulfate pentahydrate
50 g/l conc. sulfuric acid
0.2 g/l sodium dodecyl sulfate
pH= 1,0
T = 40°C

Raw metal foam:

10 ppi aluminium foam (AlSi7Mg0.3, M-PORE, Dresden, Germany)

Parameters of deposition:

$j_m$: 0.45 mA/cm$^2$
t: 3d 11h 59min
The product was an aluminium foam coated with a 50 $\mu$m thick layer of nano-Cu (average crystallite size: 93nm)

## Example 4

Electrolyte:

281 g/l nickel sulfate hexahydrate
60 g/l nickel chloride hexahydrate
30 g/l boric acid
0.2 g/l sodium dodecyl sulfate

Raw metal foam:

10 ppi aluminium foam (AlSi7Mg0.3, M-PORE, Dresden, Germany)

Parameters of deposition:

$j_m$: 1.1 mA/cm$^2$
t: 3d 1h 58min
The product was an aluminium foam coated with a 100 $\mu$m thick layer of nano-Ni (average crystallite size: 43 nm)

## Example 5

Electrolyte:

281 g/l nickel sulfate hexahydrate
60 g/l nickel chloride hexahydrate
30 g/l boric acid
0.2 g/l sodium dodecyl sulphate
7.5 g/l naphthalene-1,3,6-trisulfonic acid trisodium salt
120 g/l $\alpha$-Al$_2$O$_3$
pH = 4.1
T = 50°C

Raw metal foam:

10 ppi aluminium foam (AlSi7Mg0.3, M-PORE, Dresden, Germany)

Parameters of deposition:

$t_{on}$: 3 ms / $t_{off}$: 7 ms
$j_p$: 3.7 mA/cm$^2$
Frequency: 100 Hz
t: 1d 13h 00min
The product was an aluminium foam coated with a 50 $\mu$m thick layer of a nano-Ni/nano-Al$_2$O$_3$ metal matrix composite coating (average crystallite size of the nickel matrix: 50 nm; Al$_2$O$_3$ particle content: 14 vol.-%)

**Example 6 - Mechanical behaviour of metal foams of the invention**

The mechanical behaviour of open cell aluminium foams with coatings of different metals was investigated under quasistatic compression loading in order to enhance the energy absorption capability of the foams. Investigated coating metals were nickel, copper and iron.

The best performance for the purpose of enhanced energy dissipation during compressive loading has been provided by a coating of nanocrystalline nickel having a crystallite size of 43 nm.

In a second step the effect of coating thickness and pore size was studied by slow and fast quasistatic compression tests and at least dynamic compression tests with a Split-Hopkinson-Pressure-Bar (SHPB). There was a linear increase in energy absorption capability with coating thickness for the absolute values and per foam thickness, but per density or mass the energy absorption capability reached a saturation point. So there is an optimum in coating thickness.

As with uncoated aluminium foams there was an increase in plateau stress by decreasing the pore size. A decrease in pore size from 10 to 30 ppi more than doubled the energy absorption capability per foam thickness of coated foams. And there is a slight enhancement of energy absorption capability per mass. Other characteristics like compression strength and plateau stress showed a similar behaviour with respect to the energy absorption capability. Under dynamic loading there was also an increase in energy absorption capability by a factor of 10 for a coating thickness of 50 $\mu$m in comparison to uncoated foams even at a very small foam thickness of 4 mm. The foams exhibited only little effect of strain rate sensitivity on plateau stress.

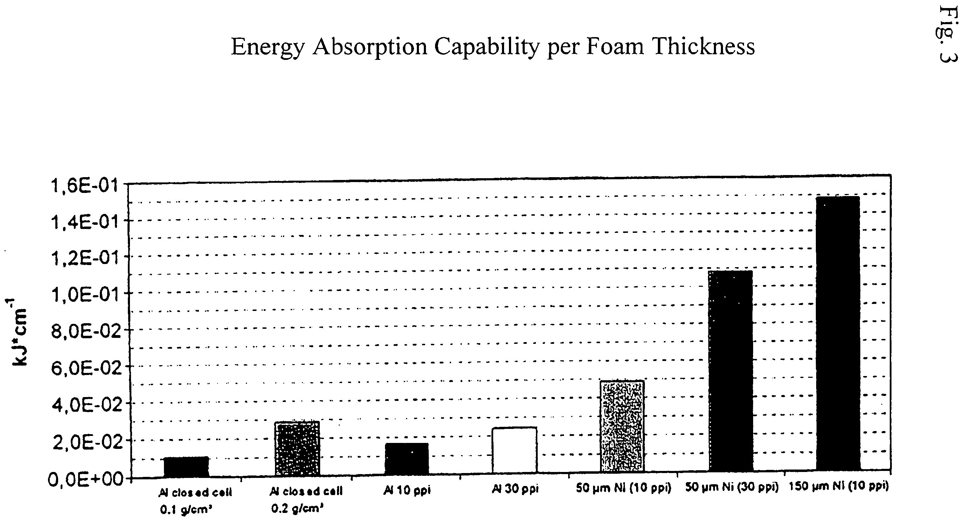

Fig. 3 shows the energy absorption capabilities per foam thickness of various non-coated aluminium foams and of aluminium foams of different pore sizes coated with different thicknesses of nano-Ni having a crystallite size of 43 nm. The energy absorption capability increases with a decrease in pore size and with the thickness of the coating layer.

**Claims**

1. An open cell porous structure comprising a nanocrystalline metallic or nanocrystalline metal matrix composite coating consisting of metallic nanocrystals having a crystallite size of 5 nm to 150 nm or of metallic nanocrystals having a crystallite size of 5 nm to 150 nm and of co-deposited non-metal component particles having a particle size of 10 nm to 200 nm, respectively, wherein the nanocrystalline coating has a substantially uniform thickness, which means that the deviation from the mean thickness is not greater than 20%, within the range of from 1 $\mu$m to 1000 $\mu$m.

2. The open cell porous structure of claim 1, wherein the crystallite size is from 10 to 100 nm.

3. The open cell porous structure of claim 1 or 2, wherein the uncoated open cell porous structure comprises a material selected from one or more of a metal; a metal alloy; a metal foam, including aluminium foam, or metal alloy foam, including AlSi7Mg0.3 foam; a metal oxide, carbide and/or nitride; carbon; an organic polymeric material; a silicone; and a material derived from natural polymers and fibers; and combinations thereof.

4. The open cell porous structure of claim 3, wherein the uncoated open cell porous structure comprises a material selected from one or more of a metal; a metal alloy; a metal foam, including aluminium foam, and/or metal alloy foam, including AlSi7Mg0.3 foam.

5. The open cell porous structure of any of claims 1 to 4, wherein the metallic coating is selected from nickel, nickel alloys, zinc, tin, chromium, iron, copper, titanium, silver, gold, platinum, palladium, ruthenium, rhodium, iridium and osmium.

6. The open cell porous structure of any of claims 1 to 4, wherein the nanocrystalline metal matrix composite coating comprises one or more of the metals recited in claim 5 and a non-metal component selected from metal oxide, carbide, sulfide or nitride nanoparticles, nano-diamond particles, PTFE (polytetrafluoroethylene) nanoparticles or CNT (carbon nanotubes).

7. The open cell porous structure of any of claims 1 to 6, wherein the cells are filled with an elastomeric or thermosetting plastics.

8. The open cell porous structure of any of claims 1 to 6 wherein the cells are not filled with an elastomeric or thermosetting plastics.

9. The open cell porous structure of any of claims 1 to 7, wherein the structure has a thickness of 100 $\mu$m or more, more than 1 cm, more than 2 cm, more than 3 cm and more than 4 cm and even 5 cm.

10. The open cell porous structure of any of claims 1 to 9, wherein the thickness of nanocrystalline coating decreases from the outer region of the open cell porous structure to the inner region of the open cell porous structure.

11. The open cell porous structure of any of claims 1 to 9, wherein the thickness of nanocrystalline coating decreases from one side of the open cell porous structure to the other.

**12.** The open cell porous structure of any of claims 1 to 11, wherein on the coated open cell porous structure a further outer coating is applied.

**13.** A process for the production of the open cell porous structure of any of claims 1 to 12 comprising: coating the uncoated porous structure, if not made from an electrically conducting material, with an electrically conducting layer to form an electrically conducting intermediate open cell porous structure, and coating the electrically conducting uncoated or intermediate open cell porous structure with a metal, a metal alloy or a metal matrix composite by electroplating using a pulsed or a direct current or, as in the case of a metal matrix composite a pulse reverse current electroplating process, at an average current density of 0.2 to 40 mA/cm$^2$,

with the proviso that the electrolyte concentration, which manifests itself in the current density, is not continuously reduced so as not to obtain metal foams with a gradient in the thickness from the outside to the inside,

the cathode being the electrically conducting uncoated or intermediate open cell porous structure and the anode or anodes, which is/are positioned opposite to each outer surface of the uncoated or intermediate open cell porous structure is/are (a) sacrificial anode(s) comprising an inert conducting material and a sacrificial metal or metal alloy to be coated onto the uncoated or intermediate open cell porous structure to form the open cell porous structure coated with a nanocrystalline metallic coating.

**14.** The process of claim 13 wherein the anode has a cubic or or cuboidal cage-like form.

**15.** The process of claim 13, wherein the anode is a six-sided anode having interspaces between side walls.

**16.** The process of any of claims 13 to 15, wherein the thickness of the coating is controlled by the duration and the density of the pulsed, pulse reverse or direct current.

**17.** The process of any of claims 13 to 16, wherein additionally the pores of the open cell porous structure are filled with an elastomeric or thermosetting plastics.

**Patentansprüche**

**1.** Offenzellige poröse Struktur, umfassend eine nanokristalline metallische oder nanokristalline Metallmatrix-Verbundstoff-Beschichtung, die aus metallischen Nanokristallen mit einer Kristallitgröße von 5 nm bis 150 nm beziehungsweise aus metallischen Nanokristallen mit einer Kristallitgröße von 5 nm bis 150 nm und damit zusammen abgeschiedenen Teilchen einer nicht-metallischen Komponente mit einer Teilchengröße von 10 nm bis 200 nm besteht, wobei die nanokristalline Beschichtung eine im Wesentlichen gleichförmige Dicke im Bereich von 1 μm bis 1000 μm aufweist, wobei gleichförmige Dicke bedeutet, dass die Abweichung von der mittleren Dicke nicht größer als 20% ist.

**2.** Offenzellige poröse Struktur nach Anspruch 1, wobei die Kristallitgröße 10 bis 100 nm beträgt.

**3.** Offenzellige poröse Struktur nach Anspruch 1 oder 2, wobei die unbeschichtete offene poröse Struktur ein Material umfasst, das aus einem oder mehreren von einem Metall; einer Metalllegierung; einem Metallschaum, einschließlich Aluminiumschaum, oder Metalllegierungsschaum, einschließlich AlSi7Mg0,3-Schaum; einem Metalloxid, -carbid und/oder -nitrid; Kohlenstoff; einem organischen polymeren Material; einem Silikon; und einem Material, das von natürlichen Polymeren und Fasern abgeleitet ist; und Kombinationen davon ausgewählt ist.

**4.** Offenzellige poröse Struktur nach Anspruch 3, wobei die unbeschichtete offenzellige poröse Struktur ein Material umfasst, das aus einem oder mehreren von einem Metall; einer Metalllegierung; einem Metallschaum, einschließlich Aluminiumschaum, und/oder Metalllegierungsschaum, einschließlich AlSi7Mg0,3-Schaum, ausgewählt ist.

**5.** Offenzellige poröse Struktur nach einem der Ansprüche 1 bis 4, wobei die metallische Beschichtung ausgewählt ist aus Nickel, Nickellegierungen, Zink, Zinn, Chrom, Eisen, Kupfer, Titan, Silber, Gold, Platin, Palladium, Ruthenium, Rhodium, Iridium und Osmium.

**6.** Offenzellige poröse Struktur nach einem der Ansprüche 1 bis 4, wobei die nanokristalline Metallmatrix-Verbundstoff-Beschichtung eines oder mehrere der in Anspruch 5 genannten Metalle und eine nichtmetallische Komponente, ausgewählt aus Metalloxid-, Carbid-, Sulfid- oder Nitrid-Nanopartikeln, Diamantpartikeln, PTFE (Polytetrafluorethylen)-Nanopartikeln oder CNT (Kohlenstoff-Nanoröhrchen), umfasst.

**7.** Offenzellige poröse Struktur nach einem der Ansprüche 1 bis 6, wobei die Zellen mit einem elastomeren oder duroplastischen Kunststoff gefüllt sind.

**8.** Offenzellige poröse Struktur nach einem der Ansprüche 1 bis 6, wobei die Zellen nicht mit einem elastomeren oder duroplastischen Kunststoff gefüllt sind.

**9.** Offenzellige poröse Struktur nach einem der Ansprüche 1 bis 7, wobei die Struktur eine Dicke von 100

μm oder mehr, mehr als 1 cm, mehr als 2 cm, mehr als 3 cm und mehr als 4 cm und sogar 5 cm aufweist.

10. Offenzellige poröse Struktur nach einem der Ansprüche 1 bis 9, wobei die Dicke der nanokristallinen Beschichtung vom äußeren Bereich der offenzelligen porösen Struktur zum inneren Bereich der offenzelligen porösen Struktur abnimmt.

11. Offenzellige poröse Struktur nach einem der Ansprüche 1 bis 9, wobei die Dicke der nanokristallinen Beschichtung von einer Seite der offenzelligen porösen Struktur zu der anderen abnimmt.

12. Offenzellige poröse Struktur nach einem der Ansprüche 1 bis 11, wobei auf der beschichteten offenzelligen porösen Struktur eine weitere äußere Beschichtung aufgebracht ist.

13. Verfahren zur Herstellung der offenzelligen porösen Struktur nach einem der Ansprüche 1 bis 13, umfassend: Beschichten der unbeschichteten porösen Struktur, falls sie nicht aus einem elektrisch leitenden Material hergestellt ist, mit einer elektrisch leitenden Schicht, um eine elektrisch leitende intermediäre offenzellige poröse Struktur zu bilden, und Beschichten der elektrisch leitenden unbeschichteten oder intermediären offenzelligen porösen Struktur mit einem Metall, einer Metalllegierung oder einem Metallmatrix-Verbundstoff durch Elektroplattieren unter Verwendung eines gepulsten oder Gleichstroms oder im Fall eines Metallmatrix-Verbundstoffes eines Pulsumkehrstrom-Elektroplattierungsverfahrens bei einer Stromdichte von 0,2 bis 40 mA/cm$^2$, mit der Maßgabe, dass die Elektrolytkonzentration, die sich in der Stromdichte manifestiert, nicht fortwährend verringert wird, um nicht Metallschäume mit einem Gradienten von der Außenseite zu Innenseite zu erhalten,
wobei die Kathode die elektrisch leitende unbeschichtete oder intermediäre offenzellige poröse Struktur ist und die Anode oder die Anoden, die gegenüber jeder äußeren Oberfläche der unbeschichteten oder intermediären offenzelligen porösen Struktur angeordnet ist/sind, (eine) Opferanode(n) sind, die ein inertes leitendes Material und ein Opfermetall oder eine Opfermetalllegierung umfasst/umfassen, welche(s) auf die unbeschichtete oder intermediäre offenzellige poröse Struktur aufzutragen sind, um die mit einer nanokristallinen metallischen Beschichtung beschichtete offenzellige poröse Struktur zu bilden.

14. Verfahren nach Anspruch 13, wobei die Anode eine kubische oder quaderförmige käfigartige Form aufweist.

15. Verfahren nach Anspruch 13, wobei die Anode eine sechsseitige Anode mit Zwischenräumen zwischen Seitenwänden ist.

16. Verfahren nach einem der Ansprüche 13 bis 15, wobei die Dicke der Beschichtung durch die Dauer und die Dichte des gepulsten, umkehrgepulsten oder Gleichstroms gesteuert wird.

17. Verfahren nach einem der Ansprüche 13 bis 16, wobei zusätzlich die Poren der offenzelligen porösen Struktur mit einem elastomeren oder duroplastischen Kunststoff gefüllt werden.

**Revendications**

1. Structure poreuse à alvéoles ouverts comprenant un revêtement métallique nanocristallin ou en composite de matrice métallique nanocristalline consistant en des nanocristaux métalliques ayant une taille de cristallites de 5 nm à 150 nm ou en des nanocristaux métalliques ayant une taille de cristallites de 5 nm à 150 nm et en particules de composant non métallique co-déposées ayant une granulométrie de 10 nm à 200 nm, respectivement, dans laquelle le revêtement nanocristallin a une épaisseur sensiblement uniforme, ce qui signifie que l'écart par rapport à l'épaisseur moyenne n'est pas supérieur à 20 % dans la plage allant de 1 μm à 1 000 μm.

2. Structure poreuse à alvéoles ouverts selon la revendication 1, dans lequel la taille des cristallites est de 10 à 100 nm.

3. Structure poreuse à alvéoles ouverts selon la revendication 1 ou 2, dans laquelle la structure poreuse à alvéoles ouverts non revêtue comprend un ou plusieurs matériaux choisis parmi un métal; un alliage métallique; une mousse métallique, y compris une mousse d'aluminium, ou une mousse d'alliage métallique, y compris une mousse d'AlSi7Mg0,3; un oxyde, carbure et/ou nitrure métallique; le carbone; un matériau polymère organique; une silicone; et un matériau dérivé de fibres et de polymères naturels; ainsi que leurs combinaisons.

4. Structure poreuse à alvéoles ouverts selon la revendication 3, dans laquelle la structure poreuse à alvéoles ouverts non revêtue comprend un ou plusieurs matériaux choisis parmi un métal; un alliage métallique; une mousse métallique, y compris une mousse d'aluminium, et/ou une mousse d'alliage métallique, y compris une mousse d'AlSi7Mg0,3.

5. Structure poreuse à alvéoles ouverts selon l'une quelconque des revendications 1 à 4, dans laquelle le revêtement métallique est choisi parmi le nickel, les alliages de nickel, le zinc, l'étain, le chrome, le fer, le cuivre, le titane, l'argent, l'or, le platine, le palladium, le ruthénium, le rhodium, l'iridium et l'osmium.

6. Structure poreuse à alvéoles ouverts selon l'une quelconque des revendications 1 à 4, dans laquelle le revêtement en composite de matrice métallique nanocristalline comprend un ou plusieurs des métaux énoncés dans la revendication 5 et un composant non métallique choisi parmi les nanoparticules d'oxyde, carbure, sulfure ou nitrure métallique, les particules de nanodiamant, les nanoparticules de PTFE (polytétrafluoroéthylène) et les CNT (nanotubes de carbone).

7. Structure poreuse à alvéoles ouverts selon l'une quelconque des revendications 1 à 6, dans laquelle les alvéoles sont remplis d'une matière plastique élastomère ou thermodurcissable.

8. Structure poreuse à alvéoles ouverts selon l'une quelconque des revendications 1 à 6, dans laquelle les alvéoles ne sont pas remplis d'une matière plastique élastomère ou thermodurcissable.

9. Structure poreuse à alvéoles ouverts selon l'une quelconque des revendications 1 à 7, laquelle structure a une épaisseur de 100 $\mu$m ou plus, supérieure à 1 cm, supérieure à 2 cm, supérieure à 3 cm et supérieure à 4 cm et même 5 cm.

10. Structure poreuse à alvéoles ouverts selon l'une quelconque des revendications 1 à 9, dans laquelle l'épaisseur du revêtement nanocristallin diminue depuis la région extérieure de la structure poreuse à alvéoles ouverts vers la région intérieure de la structure poreuse à alvéoles ouverts.

11. Structure poreuse à alvéoles ouverts selon l'une quelconque des revendications 1 à 9, dans laquelle l'épaisseur du revêtement nanocristallin diminue depuis un côté de la structure poreuse à alvéoles ouverts vers l'autre côté.

12. Structure poreuse à alvéoles ouverts selon l'une quelconque des revendications 1 à 11, dans laquelle un autre revêtement extérieur est appliqué sur la structure poreuse à alvéoles ouverts revêtue.

13. Procédé pour la production de la structure poreuse à alvéoles ouverts de l'une quelconque des revendications 1 à 12, comprenant: le revêtement de la structure poreuse non revêtue, si ladite structure n'est pas faite en un matériau électriquement conducteur, avec une couche électriquement conductrice pour former une structure poreuse à alvéoles ouverts intermédiaire électriquement conductrice, et le revêtement de la structure poreuse à alvéoles ouverts intermédiaires ou non revêtue électriquement conductrice avec un métal, un alliage métallique ou un composite de matrice métallique par placage électrolytique utilisant un courant pulsé ou continu ou, comme dans le cas d'un composite de matrice métallique, un procédé de placage électrolytique à courant inversé pulsé, à une densité de courant moyenne de 0,2 à 40 mA/cm$^2$,

sous réserve que la concentration d'électrolytes, qui se manifeste par la densité de courant, ne soit pas réduite en continu afin que ne soient pas obtenues de mousses métalliques ayant un gradient d'épaisseur de l'extérieur vers l'intérieur,

la cathode étant la structure poreuse à alvéoles ouverts intermédiaire ou non revêtue électriquement conductrice, et l'anode ou les anodes, qui sont positionnées à l'opposé de chaque surface extérieure de la structure poreuse à alvéoles ouverts intermédiaire ou non revêtue, sont des anodes sacrificielles comprenant un matériau conducteur inerte et un métal ou un alliage métallique sacrificiel devant être déposé sous forme de revêtement sur la structure poreuse à alvéoles ouverts intermédiaire ou non revêtue de manière à former la structure poreuse à alvéoles ouverts revêtue d'un revêtement métallique nanocristallin.

14. Procédé selon la revendication 13, dans lequel l'anode a une forme de cage cubique ou cuboïde.

15. Procédé selon la revendication 13, dans lequel l'anode est une anode à six faces ayant des espaces intermédiaires entre les parois latérales.

16. Procédé selon l'une quelconque des revendications 13 à 15, dans lequel l'épaisseur du revêtement est contrôlée par la durée et la densité du courant direct, inversé pulsé, ou pulsé.

17. Procédé selon l'une quelconque des revendications 13 à 16, dans lequel les pores de la structure poreuse à alvéoles ouverts sont en outre remplis d'une matière plastique élastomère ou thermodurcissable.

Fig. 1

Fig. 2

Fig. 3

EP 2 261 398 B1

Energy Absorption Capability per Foam Thickness

**kJ*cm⁻¹** axis labels: 1,6E-01 / 1,4E-01 / 1,2E-01 / 1,0E-01 / 8,0E-02 / 6,0E-02 / 4,0E-02 / 2,0E-02 / 0,0E+00

Categories: Al closed cell 0.1 g/cm³ — Al closed cell 0.2 g/cm³ — Al 10 ppi — Al 30 ppi — 50 µm Ni (10 ppi) — 50 µm Ni (30 ppi) — 150 µm Ni (10 ppi)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0151064 A1
- EP 0558142 A1
- US 6217732 B1
- US 20060068926 A1
- EP 0558142 B1

**Non-patent literature cited in the description**

- **W. YANG et al.** Nanostructured palladium-silver coated nickel foam cathode for magnesium-hydrogen peroxide fuel cells. *Electrochimica Acta,* 2006, vol. 52, 9-14
- **Y. BOONYONGMANEERAT et al.** *Scripta Materialia,* 2008, vol. 59, 336-339